# EUROPÄISCHE PATENTANMELDUNG

(11) **EP 1 168 381 A2**
(43) Veröffentlichungstag der Anmeldung: **02.01.2002**
(21) Anmeldenummer: 01113999.5
(22) Anmeldetag: 08.06.2001
(51) Int. Cl.: H01F 1/24, H01F 1/33

(54) **Weichmagnetischer Werkstoff mit heterogenem Gefügeaufbau und Verfahren zu dessen Herstellung**

(30) Priorität: 30.06.2000 DE 10031923
(71) Anmelder: ROBERT BOSCH GMBH, 70442 Stuttgart (DE)
(72) Erfinder: Draxler, Waldemar, 71706 Markgroeningen (DE); Aichele, Wilfried, 71364 Winnenden (DE); Reinsch, Bernd, 71642 Ludwigsburg (DE); Czerwinski, Klaus, 73574 Iggingen (DE)

(57) **Zusammenfassung**

Es wird ein weichmagnetischer Werkstoff mit heterogenem Gefügeaufbau, insbesondere zur Verwendung in Magnetventilen, und ein Verfahren zur Herstellung eines derartigen Werkstoffes vorgeschlagen. Dazu wird zunächst eine Ausgangsmischung, aus der sich nach dem Sintern der weichmagnetische Werkstoff bildet, mit einer ferromagnetischen, insbesondere pulverförmigen ersten Ausgangskomponente als Hauptphase und einer elektrisch nicht oder schlecht leitenden, insbesondere pulverförmigen, ferromagnetischen oder ferrimagnetischen zweiten Ausgangskomponente als Sekundärphase sowie einem organischen Binder vermischt. Nach dem Sintern der Ausgangsmischung liegt die zweite Ausgangskomponente in dem erzeugten Werkstoff dann zumindest weitgehend als Korngrenzenphase vor. Das vorgeschlagene Herstellungsverfahren umfasst die Verfahrensschritte: Bereitstellen der Ausgangsmischung, Mischen der Ausgangsmischung, Formgebung der Ausgangsmischung, Entbindern der geformten Ausgangsmischung und Sintern der geformten Ausgangsmischung zu dem weichmagnetischen Werkstoff.

## Beschreibung

Die Erfindung betrifft einen weichmagnetischen Werkstoff mit heterogenem Gefügeaufbau, insbesondere zur Verwendung in Magnetventilen, und ein Verfahren zur Herstellung eines derartigen Werkstoffes nach der Gattung der unabhängigen Ansprüche.

### Stand der Technik

In der Kraftstoffeinspritztechnik werden zunehmend Hochleistungsmagnetventile mit immer leistungsfähigeren Magnetkreis-Baugruppen eingesetzt, um durch hohe magnetische Haltekräfte und kürzere Schaltzeiten den wachsenden Anforderungen an reduzierten Verbrauch und verbesserten Emissionswerten entsprechen zu können. Die Schlüsseleigenschaften der weichmagnetischen Werkstoffen sind dabei hohe Werte der Sättigungspolarisation und der magnetischen Permeabilität, gepaart mit einem hohen spezifischen elektrischen Widerstand zur Verringerung von Wirbelstromverlusten. Diese physikalisch konträre Forderung ist mit homogenen, kompakten Magnetwerkstoffen nur unzureichend zu erfüllen. So sind legierungstechnisch zwar spezifische elektrische Widerstände von bis zu 2 µΩm möglich, diese hochlegierten Werkstoffe weisen jedoch niedrige Werte der Sättigungspolarisation auf und sind zudem nicht spanend bearbeitbar.

Bekannte weichmagnetische Werkstoffe mit heterogenem Gefügeaufbau, das heißt Werkstoffe in denen die Körner einer insbesondere ferromagnetischen Hauptphase durch eine nichtmagnetische Zwischenkornphase (Sekundärphase) voneinander getrennt sind, beruhen einerseits auf polymerbeschichteten, presstechnisch verarbeiteten Eisenpulvern. Derartige polymerbeschichtete Eisenpulver haben jedoch den Nachteil einer ungenügenden Kraftstoffbeständigkeit, einer unzureichenden Bearbeitbarkeit und thermischen Maßhaltigkeit. Darüber hinaus weisen sie relativ niedrige Werte der erreichbaren Sättigungspolarisation und der magnetischen Permeabilität auf. Andererseits sind weichmagnetische Werkstoffe mit heterogenem Gefügeaufbau bekannt, die auf pulvertechnisch hergestellten Werkstoffen beruhen und eine keramische Sekundärphase und eine grobkörnige, magnetische Hauptphase aufweisen. Diese Werkstoffe sind zwar kraftstoffbeständig und bedingt mechanisch bearbeitbar, weisen durch ihre hohe Porosität jedoch ebenfalls unzureichend niedrige Werte der Sättigungspolarisation und der magnetischen Permeabilität auf.

### Vorteile der Erfindung

Der erfindungsgemäße weichmagnetische Werkstoff mit heterogenem Gefügeaufbau und das Verfahren zu dessen Herstellung hat gegenüber dem Stand der Technik den Vorteil, dass hohe Werte der Sättigungspolarisation von bis zu 1,7 Tesla, der magnetischen Permeabilität und gleichzeitig auch des spezifischen elektrischen Widerstandes von typischerweise mehr als 5 µΩm erreichbar sind. Darüber hinaus ist vorteilhaft, dass der zunächst vor dem Sintern in Form eines Compounds vorliegende Werkstoff durch spritzgieß- oder presstechnische Formgebung bearbeitbar ist, so dass damit auch komplex geformte Magnetkreiskomponenten herstellbar sind.

Weiterhin ist vorteilhaft, dass bei dem Gefüge des erfindungsgemäßen weichmagnetischen Werkstoffes die weichferromagnetische Hauptphase derart in das Netzwerk der Sekundärphase eingebettet ist, dass keine oder nur eine geringe elektrische Anbindung zwischen den Körnern der Hauptphase untereinander vorliegt (elektrische Entkopplung). Dies beruht darauf, dass die Verdichtung des Werkstoffes bzw. Compounds beim Sintern wesentlich von der gegenüber der Hauptphase sehr feinkörnigen Sekundärphase getragen wird. Auf diese Weise werden somit die gewünscht hohen Werte des spezifischen elektrischen Widerstandes des erhaltenen weichmagnetischen Werkstoffes erreicht.

Der erfindungsgemäße Werkstoff ist darüber hinaus mechanisch gut bearbeitbar und weist, da darin keine polymeren Gefügeanteile enthalten sind, gleichzeitig eine hohe thermische Maßhaltigkeit und Kraftstoffbeständigkeit auf.

Das erfindungsgemäße Verfahren ist somit insgesamt zur Herstellung endformnaher, komplex geformter Magnetkreiskomponenten wie Magnetscheiben, Magnettöpfe oder Magnetanker geeignet.

Vorteilhafte Weiterbildungen der Erfindungen ergeben sich aus den in den Unteransprüchen genannten Maßnahmen.

So ist die elektrisch nicht oder schlecht leitende Sekundärphase bevorzugt eine ferromagnetische oder ferrimagnetische Sekundärphase, deren Korngröße zwei Mal bis einhundert Mal kleiner ist als die Korngröße der ferromagnetischen Hauptphase. Damit ist gewährleistet, dass die Körner der Hauptphase beim Compoundieren vollständig von einer dünnen, sinteraktiven Schicht der Sekundärphase umgeben sind. Aufgrund der geringen Teilchengröße der Sekundärphase ist es darüber hinaus möglich, deren Volumenanteil insgesamt klein zu halten, so dass der Volumenanteil der weichmagnetischen Hauptphase insgesamt hoch ist.

Durch die Variation der Sintertemperatur und der Sinterdauer während des Sinterns kann zudem der Grad der Verdichtung in dem weichmagnetischen Werkstoff über die Anzahl der Kontakte zwischen den einzelnen Körnern der Hauptphase und damit der spezifische elektrische Widerstand in einfacher Weise eingestellt werden.

Aufgrund der ferromagnetischen oder ferrimagnetischen Eigenschaften der Sekundärphase ist es weiter möglich, die magnetische Koppelung zwischen den Körnern der Hauptphase zu verbessern und dadurch die magnetische Permeabilität der hergestellten Magnetkreiskomponenten zu erhöhen. Schließlich wird die magnetische Permeabilität auch dadurch zusätzlich verbessert, dass die Sekundärphase dank der sehr geringen Korngröße nur als dünne Schicht zwischen den Körnern der Hauptphase vorliegt.

Da der erfindungsgemäße weichmagnetische Werkstoff auch durch Metallpulver-Spritzgießen (MIM) verarbeitbar ist, können zur weiteren Verringerung von Wirbelstromverlusten in den schließlich erhaltenen Bauteilen in einer Weiterführung der Erfindung in einfacher, an sich bekannter Weise auch ein oder mehrere Schlitze mit typischen Breiten von 0,1 mm bis 0,5 mm eingebracht werden. Diese Bauteile eignen sich dann aufgrund der verringerten Wirbelstromverluste besonders gut als Magnetkreiskomponenten.

### Ausführungsbeispiele

Zur Herstellung des weichmagnetischen Werkstoffes mit heterogenem Gefügeaufbau wird zunächst eine ferromagnetische Hauptphase, insbesondere eine weichferromagnetische Hauptphase, in Form eines ersten Ausgangspulvers mit einer elektrisch nicht oder schlecht leitenden, optional ferro- oder ferrimagnetischen Sekundärphase in Form eines zweiten Ausgangspulvers durch Kneten mit einem temporär zugesetzten organischen Binder wie beispielsweise Mikrowachs oder einem Bindersystem mit Polypropylen und Cyclododecan compoundiert.

Die Korngröße der Hauptphase liegt dabei im Bereich von technisch üblichen Pulvern für das Metallpulver-Spritzgießen (MIM) oder für die konventionelle Pulvermetallurgie (PM). Die Korngröße der Sekundärphase ist jeweils zwei Mal bis einhundert Mal kleiner als die Korngröße der Hauptphase.

Auf diese Weise wird gewährleistet, dass die Hauptphase durch das Compoundieren zumindest weitgehend bzw. vollständig von einer dünnen, sinteraktiven Schicht der Sekundärphase umgeben ist.

Der derart hergestellte Compound-Werkstoff wird nach spritzgießtechnischer oder presstechnischer Formgebung dann in an sich bekannter Weise so entbindert und gesintert, dass bei maximaler Verdichtung die chemische Wechselwirkung zwischen der Hauptphase und der Sekundärphase minimal ist. Damit wird erreicht, dass die Verdichtung beim Sintern wesentlich von der gegenüber der Hauptphase sehr feinkörnigen Sekundärphase getragen wird.

Im Einzelnen eignet sich als erstes Ausgangspulver, d.h. als weichferromagnetische Hauptphase, besonders ein Eisenpulver oder ein Legierungspulver von Eisen mit mindestens einem Element ausgewählt aus der Gruppe Cobalt, Chrom, Silizium oder Nickel und gegebenenfalls weiteren Legierungselementen. Der Anteil des Cobalts in dem Legierungspulver liegt dabei zwischen 0 und 55 Masseprozent, der des Chroms zwischen 0,2 bis 20 Masseprozent, der des Siliziums zwischen 0,1 bis 10 Masseprozent und der des Nickels zwischen 1 und 70 Masseprozent.

Für die elektrisch nicht oder schlecht leitende Sekundärphase kommen vor allem Eisenoxidpulver, Manganoxidpulver, Weichferrite, Hartferrite, Eisen- , Nickel- und Cobalt-Silicide, Eisen- , Nickel- und Cobalt-Boride, Al₂O₃, Zirkoniumdioxid, Titandioxid, Siliziumdioxid oder Gläser bzw. Glaspulver in Frage.

Unter einem elektrisch nicht oder schlecht leitenden Material bzw. zweiten Ausgangspulver wird dabei insbesondere ein Material verstanden, dessen spezifischer elektrischer Widerstand oberhalb von 10 µΩm liegt.

Die Verarbeitung des Gemisches aus der weichferromagnetischen Hauptphase und der elektrisch nicht oder schlecht leitenden Sekundärphase erfolgt entweder durch Metallpulver-Spritzgießen (MIM), wobei die Hauptphase eine Korngröße von D₅₀ = 1 bis 50 µm, vorzugsweise 3-20 µm, aufweist. Die Korngröße der Sekundärphase beträgt dabei D₅₀ = 0,01 bis 10 µm, vorzugsweise 0,1 µm-1 µm.

Alternativ zu dem Metallpulver-Spritzgießen eignen sich zur Herstellung des weichmagnetischen Werkstoffes auch konventionelle Techniken der Pulvermetallurgie. Dazu wird die Hauptphase mit einer Korngröße von D₅₀ = 10 bis 300 µm, vorzugsweise 20 bis 100 µm, eingesetzt. Die Korngröße der Sekundärphase beträgt in diesem Fall D₅₀ = 1 bis 100 µm, vorzugsweise 1 bis 10 µm.

Hinsichtlich weiterer Details zu dem Verfahren zur Herstellung des weichmagnetischen Werkstoffes sei im Übrigen auf die Anmeldung DE 199 60 095.3 verwiesen.

## Patentansprüche

1. Gesinterter weichmagnetischer Werkstoff mit heterogenem Gefügeaufbau, insbesondere zur Verwendung in Magnetventilen, mit einer Ausgangsmischung, aus der sich nach dem Sintern der weichmagnetische Werkstoff bildet, die eine ferromagnetische erste Ausgangskomponente als Hauptphase und eine elektrisch nicht oder schlecht leitende zweite Ausgangskomponente als Sekundärphase aufweist, **dadurch gekennzeichnet, dass** die zweite Ausgangskomponente nach dem Sintern in dem weichmagnetischen Werkstoff zumindest weitgehend als Korngrenzenphase vorliegt.

2. Weichmagnetischer Werkstoff nach Anspruch 1, **dadurch gekennzeichnet, dass** die erste Ausgangskomponente eine pulverförmige Ausgangskomponente in Form eines Reineisenpulvers oder eines Eisenlegierungspulvers ist.

3. Weichmagnetischer Werkstoff nach Anspruch 2, **dadurch gekennzeichnet, dass** die Eisenlegierung Cobalt in einem Anteil von 0 bis 55 Masseprozent und/oder Chrom in einem Anteil von 0,2 bis 20 Masseprozent und/oder Silizium in einem Anteil von 0,1 bis 10 Massenprozent und/oder Nickel in einem Anteil von 0 bis 70 Masseprozent enthält.

4. Weichmagnetischer Werkstoff nach Anspruch 1, **dadurch gekennzeichnet, dass** die elektrisch nicht oder schlecht leitende zweite Ausgangskomponente eine pulverförmige, insbesondere ferromagnetische oder ferrimagnetische zweite Ausgangskomponente ist.

5. Weichmagnetischer Werkstoff nach Anspruch 1 oder 4, **dadurch gekennzeichnet, dass** die zweite Ausgangskomponente ein Eisenoxid, ein Manganoxid, ein Weichferrit, ein Hartferrit, ein Eisensilicid, ein Nickelsilicid, ein Cobaltsilicid, ein Eisenborid, ein Nickelborid, ein Cobaltborid, ein Aluminiumoxid, ein Zirkoniumoxid, ein Titanoxid, ein Siliziumoxid oder pulverförmige Glasbestandteile enthält.

6. Weichmagnetischer Werkstoff nach mindestens einem der vorangehenden Ansprüche, **dadurch gekennzeichnet, dass** die Korngröße der ersten Ausgangskomponente (Hauptphase) zwei Mal bis einhundert Mal kleiner ist als die Korngröße der zweiten Ausgangskomponente (Sekundärphase).

7. Weichmagnetischer Werkstoff nach mindestens einem der vorangehenden Ansprüche, **dadurch gekennzeichnet, dass** die zumindest weitgehend durch die zweite Ausgangskomponente gebildete Korngrenzenphase nach dem Sintern die Pulverteilchen der ersten Ausgangskomponente zumindest bereichsweise umgibt.

8. Weichmagnetischer Werkstoff nach mindestens einem der vorangehenden Ansprüche, **dadurch gekennzeichnet, dass** die Ausgangsmischung 75 bis 99 Gewichtsprozent der ersten pulverförmigen Ausgangskomponente, 1 bis 25 Gewichtsprozent der zweiten pulverförmigen Ausgangskomponente und 0 bis 5 Gewichtsprozent eines organischen Binders enthält.

9. Verfahren zur Herstellung eines weichmagnetischen Werkstoffes mit heterogenem Gefügeaufbau, insbesondere eines weichmagnetischen Werkstoffes nach mindestens einem der vorangehenden Ansprüche, mit folgenden Verfahrensschritten: a) Bereitstellen einer Ausgangsmischung mit einer ferromagnetischen Ausgangskomponente als Hauptphase, einer elektrisch nicht oder schlecht leitenden zweiten Ausgangskomponente als Sekundärphase und einem organischen Binder, b) Mischen der Ausgangsmischung, c) Formgebung der Ausgangsmischung, d) Entbindern der geformten Ausgangsmischung und e) Sintern der geformten Ausgangsmischung zu dem weichmagnetischen Werkstoff.

10. Verfahren nach Anspruch 9, **dadurch gekennzeichnet, dass** zur Formgebung gemäß Verfahrensschritt c) ein Spritzgießen, insbesondere ein Metallpulver-Spritzgießen (MIM), oder ein pulvermetallurgisches Formgebungsverfahren eingesetzt wird.

11. Verfahren nach Anspruch 9 oder 10, **dadurch gekennzeichnet, dass** die erste Ausgangskomponente und/oder die zweite Ausgangskomponente in Form eines pulverförmigen Ausgangswerkstoffes eingesetzt werden, wobei die erste Ausgangskomponente durch das Mischen der Ausgangsmischung zumindest weitgehend oder vollständig von einer dünnen, sinteraktiven Schicht der zweiten Ausgangskomponente umgeben wird.
